# EUROPÄISCHE PATENTSCHRIFT

(11) **EP 1 648 117 B1**
(45) Veröffentlichungstag und Bekanntmachung des Hinweises auf die Patenterteilung: **16.01.2008**
(21) Anmeldenummer: 05022088.8
(22) Anmeldetag: 11.10.2005
(51) Int. Cl.: H04L 12/437, H04L 12/42

(54) **Verfahren zur Synchronisation in einem redundanten Kommunikationssystem**
Method for synchronisation in a redundant communication system
Procédé de synchronisation dans un système de communication redondant

(30) Priorität: 15.10.2004 DE 102004050416
(43) Veröffentlichungstag der Anmeldung: 19.04.2006
(73) Patentinhaber: Bosch Rexroth AG, 70184 Stuttgart (DE)
(72) Erfinder: Kynast, Rigobert, 97816 Lohr am Main (DE); Leurs, Ludwig, Dr., 97816 Lohr am Main (DE); Schmid, Thomas, 97840 Hafenlohr (DE); Schultze, Stephan, Dr., 97816 Lohr am Main (DE)

(56) Entgegenhaltungen:
- DE-A1- 10 312 907
- DE-A1- 19 808 103
- US-A- 4 663 748

## Beschreibung

Die vorliegende Erfindung betrifft ein Verfahren zur Synchronisation in einem redundanten Kommunikationssystem, welches einen Zentralteilnehmer und wenigstens einen weiteren Teilnehmer aufweist, wobei wenigstens einer der weiteren Teilnehmer auf den Zentralteilnehmer synchronisiert wird, wobei hierfür wenigstens zwei Telegramme mit identischer Synchronisationsinformation vom Zentralteilnehmer zu dem wenigstens einen weiteren Teilnehmer übertragen werden. Ferner betrifft die vorliegende Erfindung ein redundantes Kommunikationssystem sowie ein entsprechendes Automatisierungssystem.

Im Hinblick auf die Offenbarung der vorliegenden Anmeldung wird auf die von der Anmelderin mit der vorliegenden Patentanmeldung gleichzeitig eingereichten weiteren deutschen Patentanmeldungen mit den Bezeichnungen "Kommunikationssystem und Verfahren zur Synchronisation desselben" und "Verfahren zur Übertragung von Daten in einem Kommunikationssystem" hingewiesen, deren gesamte Offenbarung durch diese Bezugnahme mit in die vorliegende Anmeldung aufgenommen wird.

Im Stand der Technik sind Kommunikationssysteme bekannt. Insbesondere verteilte Kommunikationssysteme sind in vielen technischen Anwendungen anzutreffen. So werden verteilte Kommunikationssysteme beispielsweise in Automatisierungssystemen mit dezentraler Steuerungs- und Antriebstechnik eingesetzt, in denen oftmals eine Vielzahl von Einzelsystemen zeitlich synchron gesteuert und angetrieben werden. Ein solches Einzelsystem kann eine Antriebseinheit, beispielsweise mit einem Synchron- und Asynchronmotor sein, mit welcher eine von mehreren, zueinander interpolierenden oder eng miteinander gekoppelt arbeitenden Achsen angetrieben wird. Typische Anwendungsgebiete solcher Automatisierungssysteme mit dezentraler Steuerungs- und Antriebstechnik sind Druck- oder auch Werkzeugmaschinen sowie auch Robotersysteme mit einer Vielzahl von zeitlich zueinander abgestimmt arbeitenden Förder- und Wirkelementen.

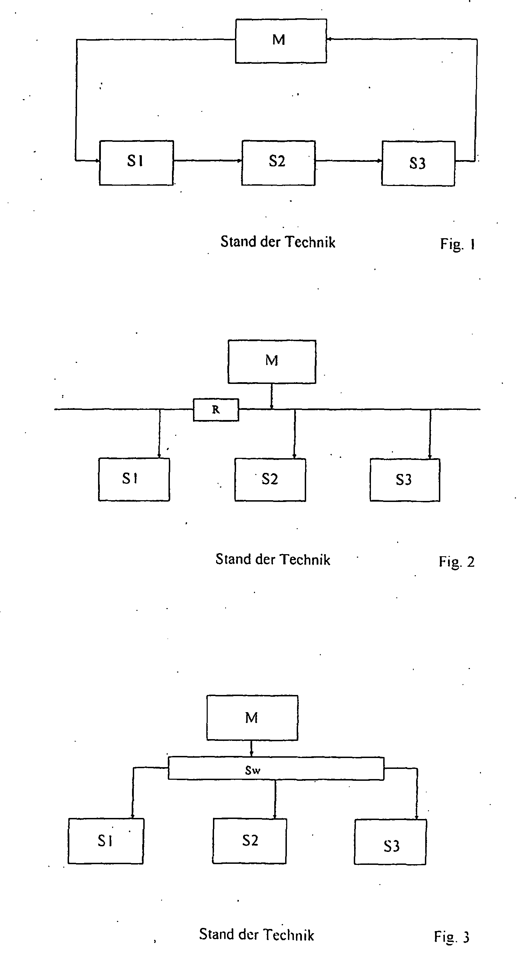

Derartige Kommunikationssysteme umfassen wenigstens zwei, in der Regel jedoch weitaus mehr Teilnehmer, die vorzugsweise hierarchisch mit einem als Zentralteilnehmer ausgebildeten Teilnehmer und den übrigen Teilnehmern als weiteren Teilnehmern des Kommunikationssystems ausgebildet bzw. angeordnet sind. Eine solche hierarchische Anordnungsstruktur ist beispielsweise als Master-Slave-Struktur mit dem Zentralteil- oder Hauptteilnehmer als "Master" oder "Master-Teilnehmer" (Hauptstation) und den weiteren Teilnehmern als "Slaves" oder "Slave-Teilnehmer" (Unter- oder Nebenstationen) bekannt. Der Zentralteilnehmer ist als zentraler Teilnehmer ausgebildet, der Steuersignale an die weiteren Teilnehmer generiert und versendet. Die weiteren Teilnehmer stehen zum Empfang dieser Steuerungssignale und zur bedarfsweisen weiteren Kommunikation mit dem Zentralteilnehmer sowie üblicherweise auch mit den anderen weiteren Teilnehmern in Kommunikationsverbindung. Die Slave-Teilnehmer beziehen sich dabei zumeist auf Prozessankopplungen, wie z.B. Sensoren und Aktoren, d.h. Ein/Ausgabebaugruppen für analoge und digitale Signale, sowie Antriebe. Die Dezentralisierung der Signalverarbeitung mit Datenvorverarbeitung bei den Slave-Teilnehmern ist erforderlich, um die Anzahl der übertragenden Daten gering zu halten und erfordert die Kommunikation zwischen dem Master-Teilnehmer und den weiteren Slave-Teilnehmern. Aus dem Stand der Technik sind hierzu im Wesentlichen die in den Fig. 1 bis 3 dargestellten drei Grundanordnungsstrukturen ("Topologien") bekannt. In Fig. 1 sind der Zentralteilnehmer M und die weiteren Teilnehmer S1, S2, S3 in einer Ringstruktur miteinander verbunden. Ein von dem Zentralteilnehmer M generiertes Signal durchläuft die Ringstruktur und passiert somit die einzelnen weiteren Teilnehmer S1, S2 und S3 in serieller Reihenfolge. Fig. 2 zeigt eine Busstruktur mit einer zentralen Busleitung an die sowohl der Zentralteilnehmer M als auch die weiteren Teilnehmer S1, S2 und S3 angeschlossen sind. Der Signal- und Datentransfer wird in bekannter Weise über einen Datenbus bewerkstelligt. Bei längeren Wegstrecken der zentralen Busleitung ist es üblich, zur Verstärkung des Signals einen "Repeater" R in die zentrale Busleitung zwischen zu schalten. Die dritte in Fig. 3 dargestellte Struktur ist eine Sternstruktur mit einem in die Verbindungsleitung integrierten, zentralen Schaltungselement Sw ("Switch"). Ein von dem Zentralteilnehmer M generiertes Signal wird mittels des Schaltungselements Sw dem als Adressaten spezifizierten Teilnehmer S 1 oder S2 oder S3 zugestellt.

Die in den Fig. 1 bis 3 dargestellten Strukturen können auch Teil eines komplexeren Systems sein, in welchem mehrere Grundanordnungsstrukturen miteinander verflochten realisiert sind. Die Generierung eines übergeordneten Steuerungssignals obliegt dann einem der Zentralteilnehmer oder auch einem übergeordnetem Zentralteilnehmer.

Ferner sind aus dem Stand der Technik auch verteilte Kommunikationssysteme bekannt, bei denen die Masterfunktion zwischen mehreren Teilnehmern oder sogar zwischen allen Teilnehmern wechseln kann. Solche "Multi-Master"-Systeme bedingen, dass mehrere Teilnehmer die Funktionalität eines zentralen Teilnehmers aufweisen und bei Vorliegen einer definierten Bedingung diese Funktion auch ausüben. Hierbei wird ein zuvor als weiterer Teilnehmer fungierender Teilnehmer Zentralteilnehmer und der bisherige Zentralteilnehmer weiterer Teilnehmer des Kommunikationssystems. Eine mögliche Bedingung für einen solchen Wechsel kann beispielsweise das Ausbleiben eines Kontrollsignals des bisherigen Zentralteilnehmers sein.

Aus der DE 103 12 907 A1 ist ein Kommunikationssystem mit redundanter Kommunikation bekannt. Dieses Kommunikationssystem weist zumindest in einem Abschnitt mindestens zwei Kommunikationspfade auf, die in einer Doppelringtopologie angeordnet sind. Die über diese Kommunikationspfade getrennt und unabhängig eintreffenden Informationssignale werden auf Richtigkeit bzw. Vollständigkeit geprüft.

Aus der US 4,633,748 ist ein local area network (LAN) bekannt. Dieses Netzwerk weist eine Ringtopologie mit einer Vielzahl von Knoten auf, wobei jeder dieser Knoten mit einem benachbarten Knoten über zwei Verbindungen verbunden ist. Dabei empfängt jeder Knoten Synchronisierungsinformation von den beiden ihm benachbarten Knoten.

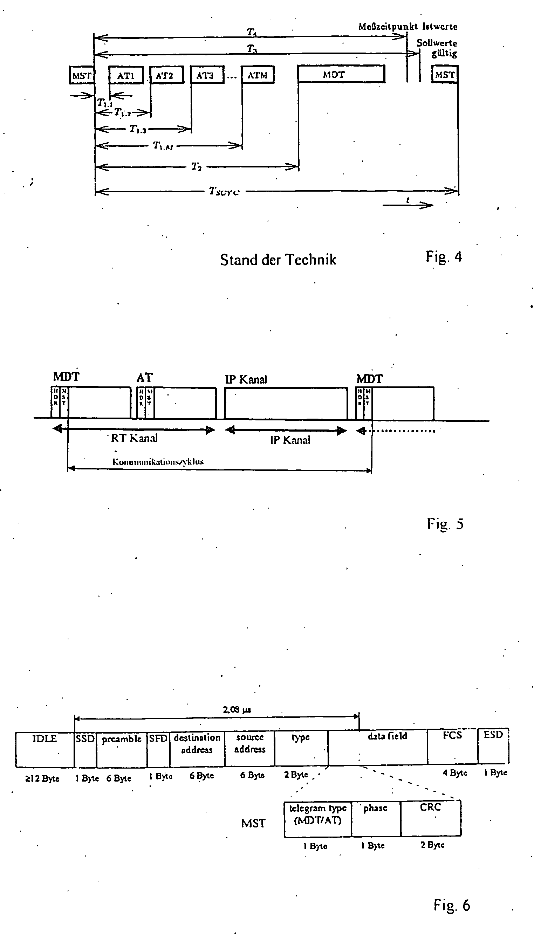

Aktuell ist von der Anmelderin unter der Bezeichnung SERCOS Interface® (SErial Real Time COmmunication System) ein derartiges verteiltes Kommunikationssystem mit ringförmiger Struktur auf dem Markt, welches über einen Zentralteilnehmer Steuerungssignale an weitere Teilnehmer generiert und sendet. Die weiteren Teilnehmer sind üblicherweise mittels Lichtwellenleiter mit dem Zentralteilnehmer verbunden. Das SERCOS interface® spezifiziert eine streng hierarchische Kommunikation. Daten werden in Form von Datenblöcken, den sogenannten Telegrammen oder "Frames" in zeitlich konstanten Zyklen zwischen der Steuerung (Master) und den Unterstationen (Slave) ausgetauscht. Unmittelbare Kommunikation zwischen den weiteren Teilnehmern bzw. Unterstationen findet nicht statt. Zusätzlich werden Dateninhalte festgelegt, d.h. Bedeutung, Darstellung und Funktionalität der übertragenen Daten ist in großem Maße vordefiniert. Bei dem SERCOS interface® ist der Master die Anschaltung der Steuerung an den Ring und ein Slave die Anschaltung einer oder mehrerer Unterstationen (Antriebe oder I/O-Stationen). Mehrere Ringe an einer Steuerung sind möglich, wobei die Koordination der einzelnen Ringe zueinander Aufgabe der Steuerung ist und nicht vom SERCOS interface® spezifiziert wird. Bevorzugt wird dieses Kommunikationssystem zur Regelung und Steuerung von verteilt angeordneten Motoren, beispielsweise von Synchron- oder Asynchronmotoren, eingesetzt. Die weiteren Teilnehmer des Kommunikationssystems sind dann die Regelgeräte zur Regelung und Steuerung jeweils eines Motors. Haupteinsatzgebiete dieses Kommunikationssystems sind insbesondere die Antriebe von Werkzeugmaschinen, Druckmaschinen, Wirkmaschinen und Maschinen der allgemeinen Automatisierungstechnik. Bei dem SERCOS interface® gibt es fünf verschiedene Kommunikationsphasen. Die ersten vier Phasen (Phase 0 bis Phase 3) dienen der Initialisierung der Teilnehmer, die fünfte Phase (Phase 4) ist der reguläre Betrieb. Innerhalb eines Kommunikationszyklus tauscht jede Unterstation Daten mit der Steuerung aus. Der Zugriff auf den Ring ist deterministisch innerhalb kollisionsfreier Sendezeitschlitze. In Fig. 4 ist der Kommunikationszyklus des regulären Betriebs, d.h. die Kommunikationsphasen 3 und 4 des SERCOS interface®, schematisch dargestellt. Bei dem. SERCOS interface® gibt es drei verschiedene Telegrammarten, nämlich Master-Synchronisationstelegramme, Antriebstelegramme und Master-Datentelegramme. Master-Synchronisationstelegramme (MST) werden vom Master-Teilnehmer ausgesandt und besitzen nur ein kurzes Datenfeld und dienen zur Vorgabe der Kommunikationsphase und als Zeitreferenz. Antriebstelegramme (AT) werden von Slave-Teilnehmern gesendet und weisen beispielsweise Ist-Werte eines durch den jeweiligen Slave-Teilnehmer angesteuerten Antriebs auf. Master-Datentelegramme (MDT) sind Summen(rahmen)telegramme mit Datenfeldern für alle Slave-Teilnehmer. Mittels Master-Datentelegramme werden vom Master an den jeweiligen Slave Soll-Werte übermittelt. Jede Unterstation bekommt während der Initialisierung den Beginn und der Länge ihres (Unter-)Datenfeldes mitgeteilt. Das SERCOS interface® definiert dabei folgende Arten von Daten, nämlich Betriebsdaten, Steuer- bzw. Statusinformationen und nicht zyklisch übertragene Daten. Die Betriebsdaten (Prozessdaten) werden in jedem Zyklus übertragen. Beispiele sind hierfür Soll- und Istwerte. Die Länge des Betriebsdatenbereichs ist parametrisierbar, sie wird bei der Initialisierung festgelegt und bleibt während des Betriebs des Ringes konstant. Die Steuerinformation, welche von den Master-Teilnehmern zu den Slave-Teilnehmern gesendet wird, und die Statusinformation, welche von den Slave-Teilnehmern zu den Master-Teilnehmern gesendet wird, sind beispielsweise Freigabesignale und Bereitschaftsmeldungen. Nicht zyklisch übertragene Daten (Service-Kanal) umfassen Einstellparameter, Diagnosedaten und Warnungen. Außerdem werden Kommandosequenzen über diese nicht zyklische Übertragung gesteuert. Der schematischen Darstellung der Fig. 4 entnimmt man, dass ein Kommunikationszyklus vom Zentralteilnehmer durch Aussendung eines MST gestartet wird. Alle kommunikationsspezifischen Zeiten werden auf das Ende dieses kurzen (ca. 25 µs langen) Telegramms bezogen. Die Unterstationen senden nun nacheinander jeweils in ihren Sendezeitschlitzen, beginnend ab T_{1,i} ihre Antriebstelegramme (ATi). Nach dem letzten AT sendet der Master ab T₂ das MDT. Der nächste Zyklus beginnt wieder mit einem MST. Der Zeitabstand zwischen zwei MSTs wird SERCOS-Zykluszeit T_{SYNC} genannt. Die Kommunikation wird bei dem SERCOS interface® auf das Ende des MST synchronisiert. Dabei wird in vorzugsweise äquidistanten Zeitschritten von dem Zentralteilnehmer ein Synchronisationstelegramm oder Synchronisationstelegramm generiert und in den Kommunikationsring eingespeist. An den Empfang des Synchronisationstelegramms und des Synchronisationssignals ist in den Regelgeräten üblicherweise über einen Zeitparameter eine Soll-/Istwertverarbeitung angekoppelt, die zu einer Bestimmung und Aufgabe von Steuer- und Regelparametern an die jeweiligen Stellmotoren führt.

Die Synchronisierung der Teilnehmer ist dabei von hervorragender Bedeutung. Falls es zu Ungenauigkeiten in der Synchronisierung der weiteren Teilnehmer auf den Zentralteilnehmer kommt, werden die von den weiteren Teilnehmern gesteuerten Vorgänge nicht synchronisiert ausgeführt. So kann beispielsweise das von einer Druckmaschine erzeugte Druckbild, deren Stellmotoren eines mittels eines solchen herkömmlichen Kommunikationssystems gesteuert werden, aufgrund der nicht hinreichend synchronen Bewegungsabläufe verschwommen sein. Entsprechendes gilt für Werkzeugmaschinen oder auch für andere Automatisierungsmaschinen, die eine hochgenaue Synchronisation der Vorgänge erfordern. Beispielsweise bei Werkzeugmaschinen kann eine fehlerhafte Synchronisierung zu einer ungenauen Maschinenbearbeitung eines Werkstücks führen da sich beispielsweise einzelne Achsen (z.B. x-, y- und z-Achsen) zeitlich unsynchronisiert bewegen.

Aufgrund der oben erläuterten Bedeutung der Synchronisierung der weiteren Teilnehmer auf den Zentralteilnehmer ist ein Fehler in einem Synchronisierungsinformation enthaltenden, vom Zentralteilnehmer versandten Telegramm äußerst problematisch.

Falls in einem Kommunikationszyklus ein Telegramm mit Synchronisationsinformation verfälscht wurde, wie durch entsprechende Prüfsummenauswertung erkennbar ist, kann in diesem Kommunikationszyklus beispielsweise keine Ansteuerung von Antrieben exakt vorgenommen werden. Es besteht daher die Notwendigkeit, das Kommunikationssystem bzw. dessen Protokolle derart auszugestalten, dass die Wahrscheinlichkeit für ein fehlerhaftes bzw. zerstörtes Synchronisierungsinformation enthaltendes Telegramm minimiert wird.

Der Erfindung liegt daher die Aufgabe zugrunde, die Nachteile des Standes der Technik zu vermeiden, und insbesondere ein Synchronisierungsverfahren der eingangs genannten Art derart weiterzubilden, dass bei einem Übertragungsfehler eines Synchronisationsinformation enthaltenden Telegramms eine Synchronisation dennoch möglich ist.

Diese Aufgabe wird bei einem Verfahren der eingangs genannten Art dadurch gelöst, dass aus den Synchronisationsinformationen der wenigstens zwei Telegramme eine resultierende Synchronisationsinformation gebildet wird, welche zur Synchronisation der weiteren Teilnehmer auf den Zentralteilnehmer verwendet wird.

Gemäß der vorliegenden Erfindung wird daher für die Synchronisierung Redundanz eingesetzt. In einem redundanten Kommunikationssystem gelangt die vom Zentralteilnehmer ausgesandte, vorzugsweise identische Synchronisierungsinformation in der Regel auf unterschiedlichen Übertragungswegen, z.B. in einem Doppelringsystem mit gegenläufigen Ringen, mehrfach zu den weiteren Teilnehmern, und zwar auch zu unterschiedlichen Zeitpunkten. Die Synchronisationsinformation muss dabei nicht identisch sein. Beispielsweise kann ein unterschiedliches Datenprotokoll auf dem Primärring und Sekundärring gefahren werden. Insbesondere ist dabei bevorzugt, dass wenigstens zwei Synchronisationssignale ankommen. Für das Kommunikationsprotokoll ist dabei eine eindeutige Abarbeitung der Synchronisierung der weiteren Teilnehmer auf den Zentralteilnehmer erforderlich, wobei hierzu eine zusätzlich als redundant vorhandene Synchronisationsinformation sich nicht einfach in das Protokoll integrieren lässt. Anders ausgedrückt ist die für den Fall des Auftretens eines Fehlers vorgesehene Redundanz im fehlerfreien Fall nicht erforderlich und führt dann auch zu nicht eindeutigem Systemverhalten, da die Synchronisationstriggerung nicht eindeutig ist. Letzteres gilt auch im fehlerbehafteten Fall bei einer Redundanzlösung mit mehr als zwei Synchronisationsinformation enthaltenden Telegrammen, wenn die Anzahl der ausfallenden Telegramme gering ist. Auch dann ist die Synchronisation nicht eindeutig. Die Erfindung löst dieses Problem durch Bildung einer resultierenden Synchronisationsinformation, in welcher alle redundant übertragenen Synchronisationsinformationen enthalten sind. Dies gilt zunächst für den fehlerfreien Fall, so dass hier ein entsprechender Betrieb sichergestellt ist. Die Bildung der resultierenden Synchronisationsinformation ist dabei auch derart, dass im fehlerbehafteten Fall, d.h. bei Ausfall von wenigstens einer Synchronisierungsinformation, immer noch eine resultierende Synchronisationsinformation gebildet werden kann, welche für einen Betrieb des erfindungsgemäßen Kommunikationssystems in dem fehlerbehafteten Kommunikationszyklus ausreicht.

Erfindungsgemäß werden aus jeder der Synchronisationsinformationen der wenigstens zwei Telegramme Synchronisationsimpulse gebildet, welche zur Bildung der resultierenden Synchronisationsinformation zu einem resultierenden Synchronisationsimpuls logisch verknüpft bzw. logisch verodert werden. Die Umwandlung der in der Regel als Phaseninformation vorliegenden Synchronisationsinformation in Synchronisationsimpulse vereinfacht die schaltungstechnische Implementierung des erfindungsgemäßen Verfahrens. Durch das Vorsehen einer logischen Oder-Schaltung kann sichergestellt werden, dass sowohl im fehlerfreien als auch im fehlerbehafteten Fall ein resultierender Synchronisationsimpuls gebildet werden kann. Dies gilt allerdings nicht für den Fall, in welchem alle Synchronisationsinformation enthaltenden Telegramme des redundanten Kommunikationssystems verfälscht wurden bzw. fehlerbehaftet sind. Allerdings wird dieser Fall mit zunehmender Anzahl von Synchronisationsinformation enthaltenden Telegrammen immer unwahrscheinlicher. Insbesondere wenn die wenigstens zwei Synchronisationsinformation enthaltenden Telegramme auf unterschiedlichen Übertragungswegen von dem Zentralteilnehmer zu dem weiteren Teilnehmer gesandt werden, ist ein Versagen der Synchronisation des weiteren Teilnehmers in diesem Kommunikationszyklus in der Praxis relativ unwahrscheinlich. Alternativ oder zusätzlich zu der Veroderung der Triggersignale sind natürlich auch andere logische Operationen denkbar (wie z.B. Verundung,...). Eine Verundung ist insbesondere bei Verwendung von inverser Logik vorteilhaft.

Vorteilhafterweise wird nach der logischen Verknüpfung der Synchronisationsimpulse aus dem resultierenden Signal der resultierende Synchronisationsimpuls diskriminiert. Dies dient dazu, einen ansonsten unter Umständen vorhandenen Doppelpuls zu verhindern, der durch Jitter der beiden Impulse nach der Verknüpfung entstehen kann. Die Diskriminierung ist daher insoweit vorteilhaft, als dass sie die für die Synchronisation erforderliche Eindeutigkeit aus den redundant vorhandenen Synchronisationsinformationen herstellt. Hierbei wird unter Jitter insbesondere ein sogenannter Phasen-Jitter verstanden, welcher durch eine Bewegung des übertragenen Signals bzw. des entsprechenden Telegramms in der Zeit oder Phase besteht. Der Betrag von Jitter erhöht sich beispielsweise bei längeren Kabeln, Kabeln mit höheren Abschwächungen und Signalen mit höheren Übertragungsraten.

Gemäß einer schaltungstechnisch bevorzugten Ausgestaltung wird zur Diskriminierung des resultierenden Synchronisationsimpulses ein Monoflop verwendet. Ein Monoflop bzw. eine monostabile Kippschaltung ändert sich nicht kontinuierlich, sondern besitzt nur einen stabilen Zustand. Der zweite Zustand ist nur für eine bestimmte durch die Dimensionierung festgelegte Zeit, die sogenannte Monoflop-Dauer, stabil. Nach Ablauf dieser Zeit kippt die Schaltung von alleine in den stabilen Zustand zurück. Die Monoflop-Schaltung wird deshalb auch als Zeitschalter, Univibrator oder One-Shot bezeichnet. Vorzugsweise ist die Monoflop-Dauer größer als der zu erwartende Jitter der wenigstens zwei Synchronisationsimpulse ausgelegt. Grundsätzlich kann aber zur Diskriminierung des resultierenden Synchronisationsimpulses auch eine zeitliche Diskriminierung verwendet werden, indem beispielsweise durch eine entsprechende Zeitsteuerung eine resultierende Synchronisationsinformation gebildet wird. Beispielsweise kann die zeitliche Diskriminierung darin bestehen, verschiedene Zeitfenster zu definieren, wobei die resultierende Synchronisationsinformation genau einem Synchronisationsimpuls entspricht, welcher in einem der Zeitfenster auftritt, wobei zwischen den einzelnen Zeitfenstern eine Rangfolge vorgegeben ist. Der erste Synchronisationsimpuls der gemäß der Rangfolge der Zeitfenster auftritt, wird dann beispielsweise als der resultierende Synchronisationsimpuls für die Synchronisierung des weiteren Teilnehmers auf den Zentralteilnehmer während des Kommunikationszyklus verwendet.

Vorteilhafterweise werden vor der Verknüpfung die Synchronisationsimpulse zeitlich derart verschoben, dass sie im Wesentlichen übereinander liegen. Dabei ist bevorzugt, dass beide Synchronisationsimpulse zeitlich verzögert werden, wobei die Differenz der beiden Verzögerungen dem zeitlichen Abstand des Empfangs der beiden Synchronisationsimpulse bei dem weiteren Teilnehmer entspricht. Es ist also eine Verknüpfung mit Zeitgliedern derart bevorzugt, dass beide Synchronisationsimpulse im fehlerfreien Fall aufeinander zu liegen kommen. Beim Ausfall eines der beiden Impulse tritt daher kein Synchronisationsjitter auf.

Gemäß einem weiteren Ausführungsbeispiel der vorliegenden Erfindung ist die resultierende Synchronisationsinformation eine Synchronisationsinformation eines der wenigstens zwei Telegramme.

Weitere bevorzugte Ausführungsformen der Erfindung sind in den abhängigen Patentansprüchen offenbart.

Die Erfindung, sowie weitere Merkmale, Ziele, Vorteile und Anwendungsmöglichkeiten derselben, wird bzw. werden nachfolgend anhand einer Beschreibung von bevorzugten Ausführungsbeispielen unter Bezugnahme auf die beigefügten Zeichnungen näher erläutert. In den Zeichnungen bezeichnen dieselben Bezugszeichen dieselben bzw. entsprechende Elemente. Dabei bilden alle beschriebenen und/oder bildlich dargestellten Merkmale für sich oder in beliebiger sinnvoller Kombination den Gegenstand der vorliegenden Erfindung, und zwar unabhängig von ihrer Zusammenfassung in den Patentansprüchen oder deren Rückbeziehung. In den Zeichnungen zeigen:
- Fig. 1: eine schematische Darstellung eines aus dem Stand der Technik bekannten Kommunikationssystems, das in einer Ringstruktur angeordnet ist;
- Fig. 2: eine schematische Darstellung eines aus dem Stand der Technik bekannten Kommunikationssystems, das in einer Busstruktur angeordnet ist;
- Fig. 3: eine schematische Darstellung eines aus dem Stand der Technik bekannten Kommunikationssystems, das in einer Sternstruktur angeordnet ist;
- Fig. 4: eine schematische Darstellung der zur Synchronisation und zum regulären Betrieb vorgesehenen Phasen des Kommunikationszyklus des aus dem Stand der Technik bekannten SERCOS interface®;
- Fig. 5: schematische Darstellung eines Ausführungsbeispiels der zur Synchronisation und zum regulären Betrieb vorgesehenen Phase des Kommunikationszyklus der erfindungsgemäßen Kommunikationssystems;
- Fig. 6: eine schematische Darstellung einer bevorzugten Telegrammstruktur mit eingebetteter Synchronisationsinformation des erfindungsgemäßen Kommunikationssystems;
- Fig. 7: eine schematische Darstellung eines aus dem Stand der Technik bekannten Kommunikationssystems mit einer Doppelring-Topologie;
- Fig. 8a bis 8e: schematische Darstellungen der in dem Kommunikationssystem der Fig. 7 ablaufenden Kommunikation, wobei die Fig. 8a bis 8e jeweils die im Kommunikationssystem übertragenen Telegramme bei den jeweiligen Teilnehmern des Kommunikationssystems zeigen; und
- Fig. 9: eine schematische Darstellung einer Schaltungsanordnung zur Bildung eines Synchronisationsimpulses gemäß einem Ausführungsbeispiel der vorliegenden Erfindung.

In Fig. 5 ist schematisch die Betriebsphase der Kommunikation des erfindungsgemäßen Kommunikationssystems im Fall einer zyklischen Kommunikation dargestellt. Man entnimmt der Fig. 5, dass Datentelegramme zwischen einem Zentralteilnehmer oder Master-Teilnehmer (oder Hauptstation) und wenigstens einem weiteren Teilnehmer (Slave-Teilnehmer oder Unter- bzw. Nebenstationen) ausgetauscht werden. Dabei ist der Zentralteilnehmer die Station, auf die sich die Nebenstationen synchronisieren sollen. Das von dem Zentralteilnehmer beispielsweise entlang eines Rings (vgl. Fig. 1) ausgesandte Datentelegramm ist als MDT (= "Master-Datentelegramm") bezeichnet. Das Datentelegramm der wenigstens einen Nebenstation wird mit AT (= "AntriebsTelegramm") bezeichnet. In Fig. 5 ist lediglich ein Antriebstelegramm gezeigt, was grundsätzlich einem Fall entsprechen kann, in welchem lediglich ein Teilnehmer vorgesehen ist (vgl. Fig. 4). Allerdings ist bevorzugt, dass das in Fig. 5 dargestellte Antriebstelegramm AT ein Summentelegramm ist und entsprechende Telegrammbereiche für eine Vielzahl von weiteren Teilnehmern aufweist. Im Master-Datentelegramm MDT sind beispielsweise Sollwerte für von den Nebenstationen anzusteuernde Aktoren enthalten. Das Antriebstelegramm AT beinhaltet z.B. entsprechende Istwerte zur Rückmeldung an den Zentralteilnehmer. Die Synchronisationsinformation wird gemäß dem vorliegenden Ausführungsbeispiel der Erfindung nicht durch ein eigenes Master-Synchronisationstelegramm MST (vgl. Fig. 4) gebildet, sondern die Synchronisationsinformation ist ein Datenfeld MST in dem Master-Datentelegramm MDT. Der genaue Aufbau des Master-Datentelegramms MDT wird weiter unten unter Bezugnahme auf Fig. 6 näher erläutert. Es sei an dieser Stelle bereits bemerkt, dass das Master-Synchronisations-Informationsfeld MST am Anfang bzw. in einem vorderen Abschnitt des Master-Datentelegramms MDT hinter einem Header HDR eingebettet ist. Das Antriebstelegramm AT besitzt zur einfacheren Implementierung des erfindungsgemäßen. Kommunikationssystems in Hardware und Software dieselbe Struktur wie das Master-Datentelegramm MDT, wobei aber in der Regel vom Antriebstelegramm keine Synchronisationsinformation an die Hauptstation übertragen wird. Dies ist deshalb vorteilhaft, da dann beide Arten von Telegrammen, nämlich MDT und AT im Hinblick auf die eigentlichen Daten, wie z.B. Soll- und Istwerte, den gleichen Offset besitzen. Der Teil der Kommunikation welcher das Master-Datentelegramm sowie wenigstens ein Antriebstelegramm umfasst, wird in Fig. 5 als RT-Kanal bezeichnet. Optional kann neben diesem RT-Kanal auch ein IP-Kanal im Kommunikationszyklus enthalten sein. Bei dem IP-Kanal handelt es sich dabei um einen Zeitschlitz zur Übertragung von gemäß dem Internetprotokoll kodierten Daten. Die Dauer des Kommunikationszyklus ist in Fig. 5 ebenfalls angezeigt. Entsprechend der Dauer des Kommunikationszyklus beim SERCOS interface® (vgl. Fig. 4), bei welchem diese vom Ende eines Master-Synchronisationstelegramms zum Ende des nächsten darauffolgenden Master-Synchronisationstelegramms definiert wird, ist der Kommunikationszyklus bei dem Kommunikationssystem der vorliegenden Erfindung als der Abstand vom Ende des Master-Synchronisationsinformationsfeldes eines Master-Datentelegramms zu dem Ende des Master-Synchronisationsinformationsfeldes eines darauffolgenden Master-Datentelegramms definiert. Der nächste Kommunikationszyklus beginnt daher mit dem dem Master-Synchronisationsinformationsfeld folgenden Anteil des Master-Datentelegramms, wie durch den punktierten Pfeil, welcher den darauf folgenden RT-Kanal des nächsten Zyklus schematisch andeutet.

In Fig. 6 ist schematisch der Aufbau des Master-Datentelegramms in weiterer Einzelheit dargestellt. Vor Beginn des eigentlichen Master-Datentelegramms ist eine Leerlaufphase ("IDLE") vorgesehen, welche mindestens 12 Byte lang ist. Das Master-Datentelegramm beginnt mit einem 1 Byte großem Datenfeld, welches als SSD ("Start Stream Delimiter") bezeichnet ist. Hierbei handelt es sich um ein Präfix, welches den Anfang eines übertragenen Datenstroms begrenzt. Darauf folgt, eine Präambel (auf Englisch: "preamble") der Länge von 6 Byte, wobei eine Funktion der Präambel darin bestehen kann, der Hardware der Elektronik in dem erfindungsgemäßen Kommunikationssystem eine Start-up-Zeit zur Verfügung zu stellen, um zu erkennen, dass ein Telegramm übertragen wird. Daran schließt sich ein Datenfeld SFD ("Start Frame Delimiter") an, welches den Anfang des eigentlichen Telegramms oder Frames abgrenzt. Das SFD-Feld ist ein 1 Byte lang. Darauffolgend sind im Master-Datentelegramm die Zieladresse ("destination address") und die Quelladresse ("source address") für das Telegramm angegeben, wobei jedes der beiden Datenfelder jeweils eine Länge von 6 Byte besitzt. Darauf folgt ein 2 Byte langes Typenfeld, welches dazu verwendet wird, zu identifizieren, welcher Typ von Netzwerkprotokoll in dem darauf folgenden Datenfeld verwendet wird. Darauf folgt das eigentliche Datenfeld, welches in seiner Länge nicht genau spezifiziert ist. Beispielsweise bei Ethernet kann die Länge des Datenfelds bis zu 1.500 Byte betragen. In der Regel wird die Länge des Datenfelds davon abhängen, wie viele und welche Daten in dem Telegramm übertragen werden. Im Anschluss an das Datenfeld ist eine 4 Bit lange Prüfsumme FCS ("Frame Check Sequence") vorgesehen. Das FCS-Feld enthält somit eine Prüfsumme, welches eine Überprüfung der Integrität der Daten in dem gesamten Telegramm gestattet. Den Abschluss der übertragenden Daten bildet das 1 Byte lange Feld ESD ("End Stream Delimiter"), welches ein Suffix und das Ende des übertragenen Datenstroms darstellt.

Das Master-Synchronisationsinformationsfeld bildet einen Teil des Datenfelds des erfindungsgemäßen Telegramms und ist genauer am Anfang des Datenfeldes in dieses eingebettet. Das Master-Synchronisationsinformationsfeld ist in seiner Länge konstant und weist ein Anfangsfeld der Länge von einem Byte auf, in welchem der Telegrammtyp spezifiziert ist. In diesem Feld wird insbesondere spezifiziert, ob es sich bei dem vorliegenden Telegramm um ein Master-Datentelegramm MDT oder ein Antriebstelegramm AT handelt. Wie bereits oben erläutert wurde ist die Synchronisationsinformation grundsätzlich nur für ein Master-Datentelegramm erforderlich, da sich die Nebenstationen auf den Zentralteilnehmer (= Master) synchronisieren sollen. Aus Gründen der einfacheren Implementierung in Hard- und Software ist jedoch bevorzugt, dass die Antriebstelegramme denselben Aufbau wie das Master-Datentelegramm besitzen, so dass auch ein Antriebstelegramm das Master-Synchronisationsinformationsfeld aufweisen kann. Für diesen Fall ist das Feld "Telegrammtyp" daher mit der entsprechenden Information der Nebenstation zu besetzen. Die eigentliche Synchronisationsinformation wird in einem darauf folgenden Feld ("Phase") der Länge von einem Byte übertragen. Den Abschluss des Master-Synchronisationsinformationsfeld bildet ein CRC-Feld (="Cyclic Redundancy Check"), welches mittels zyklischer Redundanzprüfung zur Überprüfung der Integrität der Daten vom Anfang des Datenstroms, d.h. von dem SSD-Feld bis zum Phasenfeld des Master-Synchronisationsinformationsfeld, dient. Die CRC-Prüfsumme ist eine eindeutige Zahl, die erzeugt wird, indem man ein Polynom auf das Bitmuster, welches vom SSD-Feld bis zum Phasenfeld enthalten ist, anwendet. Das gleiche Polynom wird an der Empfangsstation des Datentelegramms verwendet, um eine weitere Prüfsumme zu erzeugen. Die beiden Prüfsummen werden dann verglichen, um festzustellen, ob die übertragenen Daten korrumpiert bzw. verfälscht sind. Aus der Darstellung der Fig. 6 ergibt sich, dass das Ende des CRC-Feldes einen konstanten zeitlichen Abstand von dem Anfang (Anfang des SSD-Feldes) des Master-Datentelegramms besitzt. Dieser konstante zeitliche Abstand beträgt vorzugsweise etwa zwei Mikrosekunden und ist im gezeigten Ausführungsbeispiel 2,08 Mikrosekunden. Gemäß einer alternativen bevorzugten Ausführungsform der Erfindung kann auch ein 4 Byte langes CRC-Feld verwendet werden. Der zeitliche Abstand ist dann vorzugsweise 2,24 Mikrosekunden (dies entspricht 28 Byte = 224 Bit).

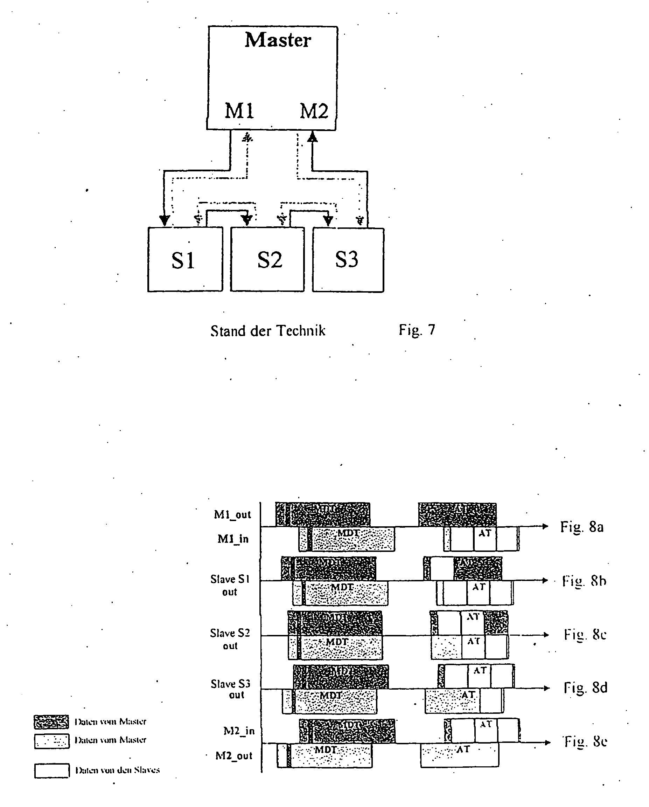

In Fig. 7 ist ein redundantes Kommunikationssystem gezeigt, wie es beispielsweise in Verbindung mit der vorliegenden Erfindung verwendet wird. Dargestellt ist ein gegenläufiger Doppelring mit zwei aktiven Ringen, wobei die Kommunikation auf beiden Ringen gleichzeitig stattfindet. Die Erfindung ist aber auf die dargestellte Struktur nicht beschränkt. Weitere Ausführungsbeispiele der redundanten Kommunikation können unterschiedliche Kommunikationssystem und auch andere Topologien, z.B. redundante Linienstrukturen, sein. Das gezeigte Kommunikationssystem weist zwei Zentralteilnehmer M1 und M2 sowie drei weitere Teilnehmer S1, S2 und S3 auf. Der gemäß der Darstellung der Fig. 7 im Gegenuhrzeigersinn verlaufende Ring wird mit Ring 1 bezeichnet, während der weitere im Uhrzeigersinn verlaufende Ring mit Ring 2 bezeichnet ist. Der Ring 1 verläuft dabei vom Zentralteilnehmer M1 zu einem Eingang des Teilnehmers S1. Der weitere Verlauf des Rings 1 ist dann von einem Ausgang des Teilnehmers S1 zu einem Eingang des Teilnehmers S2. Weiter verläuft der Ring 1 von einem Ausgang des Teilnehmers S2 zu einem Eingang des Teilnehmers S3 und von einem Ausgang des Teilnehmers S3 zum zweiten Zentralteilnehmer M1. Selbstverständlich sind auch die beiden Zentralteilnehmer M1 und M2 miteinander verbunden. Entsprechend verläuft der Ring 2 von einem Ausgang des Zentralteilnehmers M2 zu einem Eingang des Teilnehmers S3, von einem Ausgang des Teilnehmers S3 zu einem Eingang des Teilnehmers S2, von einem Ausgang des Teilnehmers S2 zu einem Eingang des Teilnehmers S1 und von einem Ausgang des Teilnehmers S1 zu einem Eingang des weiteren Zentralteilnehmers M1. Die beiden Ringe, d.h. Ring 1 und Ring 2, werden vorteilhafterweise nicht unabhängig voneinander betrieben. Um im Fehlerfall eine gesicherte Kanalkapazität für die Echtzeitanforderungen zu besitzen, wird auf den beiden Ringen dieselbe Information gleichzeitig ausgetauscht, damit durch das gleichzeitige Senden auf beiden Ringen durch die höhere Redundanz eine bessere Fehlertoleranz gegenüber Datenblockausfällen erreicht werden kann.

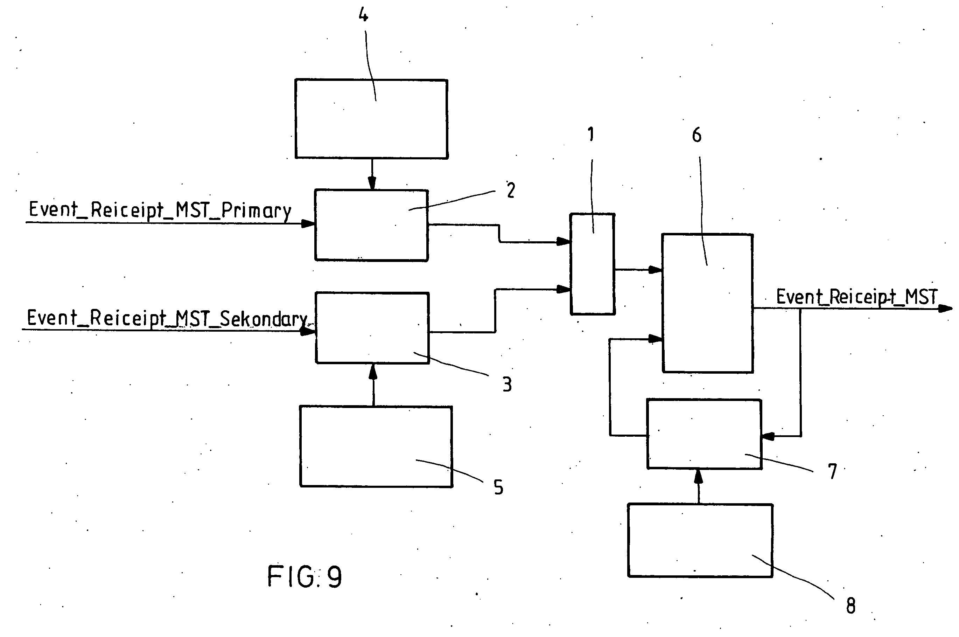

Den Fig. 8a bis 8e kann man die Telegrammübertragung auf den beiden Ringen gemäß Fig. 7 entnehmen. Hierbei ist in jeweils der oberen Hälfte der Fig. 8a bis 8e der Verkehr auf dem Ring 1 und in der unteren Hälfte der Fig. 8a bis 8e der Verkehr auf den Ring 2 an den entsprechenden Schnittstellen gezeigt. Die obere Hälfte der Fig. 8a zeigt daher den Ausgang des Zentralteilnehmers M1, welcher einen Bestandteil des Rings 1 bildet. Die untere Hälfte der Fig. 8a zeigt den Eingang des Zentralteilnehmers M1, welcher einen Bestandteil des Rings 2 bildet. Entsprechend zeigt die obere Hälfte der Fig. 8b einen Ausgang des weiteren Teilnehmers S1, welcher einen Bestandteil des Rings 1 bildet. Die untere Hälfte der Fig. 8b zeigt einen weiteren Ausgang des Teilnehmers S1, welcher einen Bestandteil des Rings 2 bildet. Entsprechend zeigt die obere Hälfte der Fig. 8c einen Ausgang des Teilnehmers S2, welcher einen Bestandteil des Rings 1 bildet. Die untere Hälfte der Fig. 8c zeigt einen weiteren Ausgang des Teilnehmers S2, welcher einen Bestandteil des Rings 2 bildet. Entsprechend zeigt die obere Hälfte der Fig. 8d einen Ausgang des Teilnehmers S3, welcher einen Bestandteil des Rings 1 bildet. Die untere Hälfte der Fig. 8d zeigt einen weiteren Ausgang des Teilnehmers S3, welcher einen Bestandteil des Rings 2 bildet. In Fig. 8e ist in der oberen Hälfte der Eingang des Zentralteilnehmers M2 dargestellt, der einen Bestandteil des Rings 1 bildet. In der unteren Hälfte der Fig. 8e ist der Ausgang des Teilnehmers M2 dargestellt, welcher einen Bestandteil des Rings 2 bildet. Die in Fig. 8a bis 8e dargestellten Telegramme, gezeigt ist ein Master-Datentelegramm MDT und ein Antriebstelegramm AT, welche beide als Summentelegramme ausgebildet sind, entsprechen den zuvor bereits in Verbindung mit Fig. 5 und 6 beschriebenen Ausführungsbeispielen. Man entnimmt einem Vergleich der Fig. 8a bis 8e deutlich, dass die Übertragung der Telegramme entlang dem Ring zu einer entsprechenden zeitlichen Verzögerung führt. Grundsätzlich erreichen die Telegramme die einzelnen Teilnehmer des in Fig. 7 gezeigten Kommunikationssystems zu unterschiedlichen Zeitpunkten. Dies, gilt insbesondere für die in den Fig. 8a, 8b, 8d und 8e gezeigten Teilnehmer M1, S1, S3 und M2. Aufgrund der Symmetrie der Anordnung treffen bei dem Teilnehmer S2 (vgl. Fig. 8c) die entsprechenden Telegramme gleichzeitig ein. Insbesondere der rechten Hälfte der Fig. 8a bis 8e, welche das als Summentelegramm ausgebildete Antriebstelegramm zeigt, entnimmt man deutlich, dass für die drei weiteren Teilnehmer S1, S2 und S3 jeweils ein vorderer, mittlerer und hinterer Abschnitt des Antriebstelegramms vorgesehen ist. Bei einem jeweiligen Durchlauf durch den Teilnehmer S1, S2 oder S3 wird der entsprechende Abschnitt mit Daten, beispielsweise Istwertdaten, des jeweiligen Teilnehmers aufgefüllt. In dem vorliegenden Ausführungsbeispiel wird die Synchronisationsinformation nicht wie beim Stand der Technik (vgl. Fig. 4) mittels eigener Master-Synchronisationstelegramme übertragen. Stattdessen wird gemäß dem vorliegenden Ausführungsbeispiel der vorliegenden Erfindung (vgl. Fig. 5 und 6) die Synchronisationsinformation eingebettet in das Master-Datentelegramm übertragen, wodurch sich eine erhöhte Protokolleffizienz ergibt. Die Erfindung ist jedoch hierauf nicht beschränkt und kann auch mit eigenen Master-Synchronisierungstelegrammen MST (vgl. Fig. 4) verwendet werden. Man entnimmt der Darstellung der linken Hälfte der Fig. 8a bis 8e deutlich, dass die Synchronisationsinformation, d.h. das Datenfeld MST des Master-Datentelegramms MDT, an den jeweiligen weiteren Teilnehmers S1, S2 und S3 zu unterschiedlichen Zeiten ankommt. Wie bereits oben bemerkt, empfängt aus Symmetriegründen lediglich der Teilnehmer S2 die Synchronisationsinformation aus beiden Ringen gleichzeitig. Durch die vorliegende Erfindung wird nun die redundant vorhandene Synchronisationsinformation, die bei jedem Teilnehmer im fehlerfreien Fall doppelt ankommt, zur Synchronisation verwendet. Die unterschiedlichen Laufzeiten sind zwar von weiteren Teilnehmern zu weiteren Teilnehmern unterschiedlich, sind aber dem weiteren Teilnehmer bekannt und können daher kompensiert werden. Wie aus den zu unterschiedlichen Zeiten bei den weiteren Teilnehmern empfangenen Synchronisationsinformationen eine eindeutige Vorschrift zur Synchronisationstriggerung gebildet wird, wird im Folgenden unter Bezugnahme auf Fig. 9 näher erläutert.

In Fig. 9 ist ein schematisches Blockschaltbild dargestellt, welches eine bevorzugte Schaltungsanordnung zur Bildung eines resultierenden Synchronisationsimpulses Event_Receipt_MST aus dem Synchronisationsimpuls des ersten Rings Event_Receipt_ MST_Primary und dem Synchronisationsimpuls des zweiten Rings Event_ Receipt_ MST_Secondary zeigt. Zentrales Element der in Fig. 9 gezeigten Schaltungsanordnung ist ein Oder-Logikschaltungelement bzw. -Gatter 1, welches aus den beiden vorverarbeiteten Synchronisationsimpulsen des ersten und zweiten Rings, d.h. der Synchronisationsimpulse Event_Receipt_MST_Primary bzw. Event_Receipt_MST_Secondary, ein einziges Signal bildet. Die Vorverarbeitung der beiden Synchronisationsimpulse des ersten und zweiten Rings geschieht durch jeweilige Verzögerungsschaltungen 2 bzw. 3 in Form einer jeweiligen im Allgemeinen unabhängig voneinander arbeitenden Verzögerung. Der Wert der zeitlichen Verzögerung der Verzögerungsschaltung 2 wird einem Register 4 entnommen und entsprechend wird der Wert der Verzögerungsschaltung 3 einem Register 5 entnommen. Gemäß einer bevorzugten Ausführungsform wird der spätere der beiden Synchronisationsimpulse Event_Receipt_MST_Primary und Event_ Receipt_MST_Secondary nicht verzögert, d.h. der entsprechende Wert der Verzögerung der dem späteren Synchronisationsimpuls zugeordneten Verzögerungsschaltung 2 bzw. 3 wird Null sein, und lediglich der frühere der beiden Synchronisationsimpulse wird verzögert. Vorteilhafterweise ist in diesem Fall der Betrag der Verzögerung derart, dass beide Synchronisationsimpulse im fehlerfreien Fall aufeinander zu liegen kommen. Damit soll im fehlerfreien Fall sichergestellt werden, dass aus den beiden empfangenen Synchronisationsimpulsen lediglich ein resultierender Synchronisationsimpuls gebildet wird. Die beiden unter Umständen verzögerten Synchronisationsimpulse des ersten bzw. zweiten Rings werden an den Eingang der Oder-Schaltung 1 angelegt. Der Ausgang der Oder-Schaltung 1 ist mit dem "Set"-Eingang des Monoflops 6 verbunden. In einer gemäß dem Stand der Technik bekannten Art und Weise ist ein Zeitsteuerungsglied bzw. Verzögerung 7 über den Ausgang des Monoflop 6 mit dem Reset-Eingang rückgekoppelt. Über die Verzögerungsschaltung 7, welche einen Wert der Verzögerung aus einem Register 8 entnimmt, kann die Einschaltzeit bzw. Monoflop-Dauer des Monoflops 6 vorgegeben werden. Das Monoflop 6 besitzt grundsätzlich nur einen stabilen Zustand, z.B. 0 Volt. Der zweite Zustand ist nur für eine bestimmte durch die Dimensionierung, d.h. den Wert der in dem Register 8 vorgegebenen Einschaltzeit stabil. Nach dieser Zeit kippt die Schaltung wieder von alleine in den stabilen Zustand zurück. Ausgelöst wird der Umschaltvorgang auf den zweiten Zustand durch das Vorliegen wenigstens eines Synchronisationsimpulses. Das Monoflop 6, die Verzögerungsschaltung 7 in Verbindung mit dem Register 8 bilden daher eine Schaltungsanordnung, welche einen Synchronisationsimpuls der Länge des in dem Register 8 gespeicherten Werts erzeugt, falls (wie durch die Oder-Schaltung 1 vorgegeben) wenigstens einer der beiden Synchronisationsimpulse empfangen wird. Gemäß einer bevorzugten Ausführungsform der Erfindung wird die Monoflop-Dauer bzw. die Einschaltzeit größer als der zu erwartende Jitter beider Synchronisationsimpulse ausgelegt.

Die Erfindung wurde vorstehend anhand von bevorzugten Ausführungsformen derselben näher erläutert. Für einen Fachmann ist es jedoch offensichtlich, dass unterschiedliche Abwandlungen und Modifikationen gemacht werden können, ohne von dem der Erfindung zugrundeliegenden Gegenstand abzuweichen.

## Patentansprüche

1. Verfahren zur Synchronisation in einem redundanten Kommunikationssystem, welches einen Zentralteilnehmer (M; M1, M2) und wenigstens einen weiteren Teilnehmer (S1, S2, S3) aufweist, wobei wenigstens einer der weiteren Teilnehmer (S1, S2, S3) auf den Zentralteilnehmer (M; M1, M2) synchronisiert wird, wobei hierfür wenigstens zwei Telegramme mit Synchronisationsinformation vom Zentralteilnehmer (M; M1, M2) zu dem wenigstens einen weiteren Teilnehmer (S1, S2, S3) übertragen werden, und aus den Synchronisationsinformationen der wenigstens zwei Telegramme eine resultierende Synchronisationsinformation gebildet wird, welche zur Synchronisation der weiteren Teilnehmer (S1, S2, S3) auf den Zentralteilnehmer (M; M1, M2) verwendet wird, **dadurch gekennzeichnet, dass** aus jeder der Synchronisationsinformationen der wenigstens zwei Telegramme Synchronisationsimpulse gebildet werden, welche zur Bildung der resultierenden Synchronisationsinformation zu einem resultierenden Synchronisationsimpuls logisch verknüpft werden und die logische Verknüpfung eine Veroderung und/oder eine Verundung ist.

2. Verfahren nach Anspruch 1, **dadurch gekennzeichnet, dass** nach der logischen Verknüpfung der Synchronisationsimpulse aus dem resultierenden Signal der resultierende Synchronisationsimpuls diskriminiert wird.

3. Verfahren nach Anspruch 2, **dadurch gekennzeichnet, dass** zur Diskriminierung des resultierenden Synchronisationsimpulses ein Monoflop (6) verwendet wird.

4. Verfahren nach Anspruch 3, **dadurch gekennzeichnet, dass** die Monoflop-Dauer größer als der zu erwartende Jitter der wenigstens zwei Synchronisationsimpulse ausgelegt ist.

5. Verfahren nach einem der Ansprüche 2 bis 4, **dadurch gekennzeichnet, dass** zur Diskriminierung des resultierenden Synchronisationsimpulses eine zeitliche Diskriminierung verwendet wird.

6. Verfahren nach einem der Ansprüche 2 bis 5, **dadurch gekennzeichnet, dass** vor der Verknüpfung die Synchronisationsimpulse zeitlich derart verschoben werden, dass sie im Wesentlichen übereinanderliegen.

7. Verfahren nach Anspruch 6, **dadurch gekennzeichnet, dass** beide Synchronisationsimpulse zeitlich verzögert werden, wobei die Differenz der Verzögerungen dem zeitlichen Abstand des Empfangs der beiden Synchronisationsimpulse bei dem weiteren Teilnehmer (S 1, S2, S3) entspricht.

8. Verfahren nach einem der Ansprüche 1 bis 7, **dadurch gekennzeichnet, dass** an den resultierenden Synchronisationsimpuls eine Antriebsregelung angekoppelt ist.

9. Verfahren nach Anspruch 1 oder 8, **dadurch gekennzeichnet, dass** die resultierende Synchronisationsinformation eine Synchronisationsinformation eines der wenigstens zwei Telegramme ist.

10. Verfahren nach einem der Ansprüche 1 bis 9, **dadurch gekennzeichnet, dass** die wenigstens zwei Telegramme mit Synchronisationsinformation vom Zentralteilnehmer (M; M1, M2) zu dem wenigstens einen weiteren Teilnehmer (S1, S2, S3) auf unterschiedlichen Übertragungswegen übertragen werden.

11. Verfahren nach einem der Ansprüche 1 bis 10, **dadurch gekennzeichnet, dass** die Synchronisationsinformation in Ethernet-Telegramme eingebettet ist.

12. Ein redundantes Kommunikationssystem mit Mitteln zur Durchführung aller Schritte eines Verfahrens nach einem der Ansprüche 1-11.

13. Kommunikationssystem nach Anspruch 12 **dadurch gekennzeichnet, dass** das Kommunikationssystem ein verteiltes Kommunikationssystem zur dezentralen Steuerung mit einer Master-Slave-Struktur ist.

14. Kommunikationssystem nach Anspruch 12 oder 13**dadurch gekennzeichnet, dass** das Kommunikationssystem in einer redundanten Ringstruktur, vorzugsweise einer Doppelringstruktur, und/oder einer redundanten Linienstruktur und/oder einer redundanten Sternstruktur angeordnet ist.

15. Kommunikationssystem nach einem der Ansprüche 12 bis 14 **dadurch gekennzeichnet**, ss das Kommunikationssystem auf Ethernet-Physik basiert.

16. Automatisierungssystem mit einem Kommunikationssystem gemäß einem der Ansprüche 12 bis 15, wobei das Automatisierungssystem einen Steuereinheit sowie wenigstens eine Antriebseinheit oder Ein-/Ausgabeeinheit aufweist, und wobei die Steuereinheit mit dem Zentralteilnehmer und jeweils eine der wenigstens einen Antriebseinheit oder Ein-/Ausgabeeinheit mit einem der wenigstens einen weiteren Teilnehmer verbunden ist.

## Claims

1. Method for synchronization in a redundant communication system which has a central subscriber (M; M1, M2) and at least one further subscriber (S1, S2, S3), with at least one of the further subscribers (S1, S2, S3) being synchronized with the central subscriber (M; M1, M2), with at least two messages with synchronization information being transmitted for this purpose from the central subscriber (M; M1, M2) to the at least one further subscriber (S1, S2, S3) and with resultant synchronization information being formed from the synchronization information in the at least two messages and being used for synchronization of the further subscribers (S1, S2, S3) with the central subscriber (M; M1, M2), **characterized in that** synchronization pulses are formed from each of the synchronization information items in the at least two messages and are logically linked with a resultant synchronization pulse in order to form the resultant synchronization information, and the logical link is an OR and/or an AND process.

2. Method according to Claim 1, **characterized in that** the resultant synchronization pulse is discriminated from the resultant signal on the basis of the logical linking of the synchronization pulses.

3. Method according to Claim 2, **characterized in that** a monostable multivibrator (6) is used to discriminate the resultant synchronization pulse.

4. Method according to Claim 3, **characterized in that** the monostable multivibrator period is greater than the jitter to be expected in the at least two synchronization pulses.

5. Method according to one of Claims 2 to 4, **characterized in that** time discrimination is used in order to discriminate the resultant synchronization pulse.

6. Method according to one of Claims 2 to 5, **characterized in that**, before the linking process, the synchronization pulses are shifted in time such that they are essentially coincident.

7. Method according to Claim 6, **characterized in that** the two synchronization pulses are delayed in time, with the difference in the delays corresponding to the time interval between the reception of the two synchronization pulses in the further subscriber (S1, S2, S3).

8. Method according to one of Claims 1 to 7, **characterized in that** closed-loop drive control is coupled to the resultant synchronization pulse.

9. Method according to Claim 1 or 8, **characterized in that** the resultant synchronization information is synchronization information from one of the at least two messages.

10. Method according to one of Claims 1 to 9, **characterized in that** the at least two messages with synchronization information are transmitted on different transmission paths from the central subscriber (M; M1, M2) to the at least one further subscriber (S1, S2, S3).

11. Method according to one of Claims 1 to 10, **characterized in that** the synchronization information is embedded in Ethernet messages.

12. A redundant communication system with means for carrying out all the steps of a method according to one of Claims 1 to 11.

13. Communication system according to Claim 12, **characterized in that** the communication system is a distributed communication system for decentralized control using a master-slave structure.

14. Communication system according to Claim 12 or 13, **characterized in that** the communication system is arranged in a redundant ring structure, preferably a double-ring structure, and/or a redundant line structure and/or a redundant star structure.

15. Communication system according to one of Claims 12 to 14, **characterized in that** the communication system is based on Ethernet physics.

16. Automation system having a communication system according to one of Claims 12 to 15, with the automation system having a control unit as well as at least one drive unit or input/output unit, and with the control unit being connected to the central subscriber, and with in each case one of the at least one drive unit or input/output unit being connected to one of the at least one further subscriber or subscribers.

## Revendications

1. Procédé de synchronisation d'un système de communication redondant ayant un participant central (M ; M1, M2) et au moins un autre participant (S1, S2, S3) au moins l'un des autres participants (S1, S2, S3) étant synchronisé sur le participant central (M ; M1, M2),
et pour cela au moins deux télégrammes avec une information de synchronisation sont transmis au participant central (M ; M1, M2) vers au moins un autre participant (S1, S2, S3) et à partir des informations de synchronisation au moins des deux télégrammes, on forme une information de synchronisation résultante utilisée pour synchroniser les autres participants (S1, S2, S3) sur le participant central (M ; M1, M2),
**caractérisé en ce qu'**
à partir de chacune des informations de synchronisation d'au moins deux télégrammes on forme des impulsions de synchronisation que l'on combine logiquement pour former l'information de synchronisation résultante en une impulsion de synchronisation résultante et la combinaison logique est une combinaison ou et/ou une combinaison et.

2. Procédé selon la revendication 1,
**caractérisé en ce qu'**
après la combinaison logique des impulsions de synchronisation on discrimine l'impulsion de synchronisation résultante à partir du signal résultant.

3. Procédé selon la revendication 2,
**caractérisé en ce qu'**
on utilise une bascule monostable 6 pour discriminer l'impulsion de synchronisation résultante.

4. Procédé selon la revendication 3,
**caractérisé en ce que**
la durée de la bascule monostable est supérieure à l'oscillation prévisible au moins des deux impulsions de synchronisation.

5. Procédé selon l'une des revendications 2 à 4
**caractérisé en ce que**
pour discriminer l'impulsion de synchronisation résultante on utilise une discrimination temporelle.

6. Procédé selon l'un des revendications 2 à 5,
**caractérisé en ce qu'**
avant de combiner les impulsions de synchronisation on les décale dans le temps pour qu'elles se chevauchent pratiquement.

7. Procédé selon la revendication 6
**caractérisé en ce qu'**
on retarde les deux impulsions de synchronisation dans le temps, la différence des retards correspondant à la distance dans le temps de la réception des deux impulsions de synchronisation par un autre participant (S1, S2, S3).

8. Procédé selon l'une des revendications 2 à 7
**caractérisé en ce que en ce qu'**une régulation d'entraînement est couplée sur l'impulsion de synchronisation résultante.

9. Procédé selon l'une des revendications 8,
**caractérisée en ce que**
l'information de synchronisation résultante est une information de synchronisation d'au moins l'un des deux télégrammes.

10. Procédé selon l'une des revendications 1 à 9
**caractérisé en ce qu'**
au moins l'un des deux télégrammes sont transmis avec l'information de synchronisation par le participant central (M ; M1, M2) vers au moins un autre participant (S1, S2, S3) suivant des chemins de transmission différents.

11. Procédé selon l'une des revendications 1 à 10
**caractérisé en ce que**
l'information de synchronisation est intégrée dans un télégramme éthernet.

12. Un système de communication redondant comportant des moyens pour la mise en oeuvre de toutes les étapes d'un procédé selon l'un des revendications 1 à 11.

13. Système de communication selon la revendication 12
**caractérisé en ce qu'**
il est un système de communication réparti pour la commande décentralisée avec une structure maître-esclave.

14. Système de communication selon les revendications 12 ou 13
**caractérisé en** de qu'
il a une structure redondante en anneau et de préférence une structure en double anneau et/ou une structure linéaire redondante et/ou une structure en étoile redondante.

15. Système de communication selon l'une des revendications 12 à 14
**caractérisé en ce que**
le système de communication est fondé sur la physique internet.

16. Système d'automatisation comportant un système de communication selon l'une des revendications 1 à 15, système d'automatisation ayant une unité de commande et au moins une unité d'entraînement et/ou une unité de réception/émission et l'unité de commande est relié au participant central et chaque fois une unité d'entraînement et/ou une unité d'émission/réception avec au moins un autre participant.
